Europäisches Patentamt

European Patent Office

Office européen des brevets

(19)

(11) Publication number: **0 181 516**
A2

# (12) EUROPEAN PATENT APPLICATION

(21) Application number: **85113090.6**

(22) Date of filing: **15.10.85**

(51) Int. Cl.⁴: **G 06 F 7/22**

(30) Priority: **14.11.84 JP 238704/84**

(43) Date of publication of application:
**21.05.86 Bulletin 86/21**

(84) Designated Contracting States:
**DE FR GB**

(71) Applicant: International Business Machines Corporation
Old Orchard Road
Armonk, N.Y. 10504(US)

(72) Inventor: Kobayashi, Makoto Sumire-Haimu F-goh
5-4-52 Kajigaya Takatsu-ku
Kawasaki-shi Kanagawa-ken(JP)

(72) Inventor: Kuroda, Akihiro
2-501-goh, 1-chome 39-ban Sangenjaya
Setagaya-ku Tokyo-to(JP)

(72) Inventor: Matsushita, Takeshi
9-24, 6-chome Tsukimino Yamato-shi
Kanagawa-ken(JP)

(74) Representative: Suringar, Willem Joachim
IBM Nederland N.V. Patent Operations Watsonweg 2
NL-1423 ND Uithoorn(NL)

(54) Data processing apparatus having efficient min and max functions.

(57) It is arranged according to the invention that there are provided latches (8, 12) temporarily storing the data being supplied to the two input ports of an ALU (7), the outputs of which latches and that of the ALU being switched by a multiplexer (9) for selected final output. And, it is also arranged that the smaller or larger one of two temporarily stored data items (8, 12) is obtained according to the status (carry CY) of the ALU and a novel instruction MIN or, respectively, MAX. Therefore, in determining the minimum or maximum value of a given set of data values having N elements, it is only required to execute the MIN or MAX instruction N - 1 times, and the maximum or minimum can thus be determined easily and fast. That is, the length of a program is shortened and the execution time is reduced.

./...

FIG. 1

DATA PROCESSING APPARATUS HAVING EFFICIENT MIN AND MAX FUNCTIONS

## Field of the Invention

This invention relates to a data processing (DP) apparatus, and more particularly to one that, next to conventional DP operations, can efficiently determine a minimum or a maximum value of a given set of data values.

## Background of the Invention

In a conventional data processing apparatus it takes relatively much time to determine a minimum or maximum value, and there is required a program routine with relatively many steps for such purpose. This will be illustrated by an example.

The following recurrence formula is frequently executed in the dynamic programming matching technique that is employed in speech recognition or the like.

$$G (I, J) = MIN \begin{Bmatrix} G (I - 1, J) \\ G (I - 1, J - 1) \\ G (I - 1, J - 2) \end{Bmatrix} + D (I, J)$$

wherein G is an accumulated distance, D is a local distance. As seen from the formula, a new accumulated distance G (I, J) is obtained by selection of the minimum one from a predetermined range (J, J − 1 and J − 2) of previous accumulated distance functions of (I − 1), and by adding it to the local distance. Reference is made, for example, to an article by Fumitada Itakura, "Minimum Prediction Residual Principle Applied to Speech Recognition", IEEE Transaction on Acoustics, Speech and Signal Processing, Vol. ASSP-23 (February 1975) for further details of the said dynamic programming matching technique.

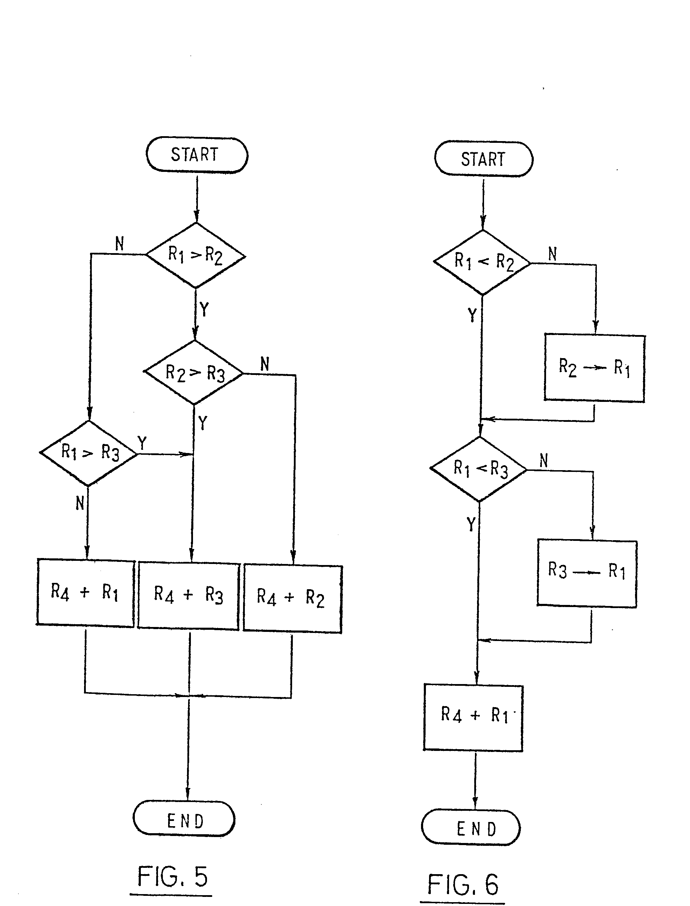

A procedure for executing the operations of the above recurrence formula is, for example, as shown in the flow chart of FIGS. 5 or 6. In these figures, Ri represents a register with index i, or its content. It is assumed that R1, R2 and R3 store G (I − 1, J), G (I − 1, J − 1) and G (I − 1, J − 2), respectively, while R4 stores D (I, J). The procedures in FIGS. 5 and 6 can be expressed in the assembler language of S/370 as

JA 9.84.015

shown below, in Tables 1 and 2, respectively, both of which require a considerable processing time and rather many instructions.

#### Table 1  Assembler of S/370 (1)

```
        . . . . . . . . . . .
        . . . . . . . . . .
LO      CR  R1, R2      *compare contents of R1 and R2*
        BH. L1          *branch to L1 if R1 > R2*
        CR  R1, R3
        BH  L2
        AR  R4, R1      *load (R4+R1) in R4*
        B   L3          *branch to L3*
L1      CR  R2, R3
        BH  L2
        AR  R4, R2
        B   L3
L2      AR  R4, R3
L3      . . . . . . . . . . .
        . . . . . . . . . .
```

#### Table 2  Assembler of S/370 (2)

```
        . . . . . . . . . .
        . . . . . . . . . .
LO      CR  R1, R2
        BL  L1          *branch to L1 if R1 < R2*
        LR  R1, R2      *load content of R2 in R1*
L1      CR  R1, R3
        BL  L2
        LR  R1, R3
L2      AR  R4, R1
        . . . . . . . . . .
        . . . . . . . . . .
```

In the above Tables 1 and 2, CR means comparison of contents of registers, BH and BL denote conditional branches (branching according to whether first operand is High or Low), AR denotes addition of the contents of registers, B means unconditional branching, and LR transfer of the content of a register (Load Register).

JA 9.84.015

-3-  0181516

## Summary of the Invention

The present invention takes the above situation into consideration, and intends to provide a data processing apparatus that can efficiently execute the determination of minimum and maximum values.

To achieve the above object, the data processing apparatus according to the invention comprises an ALU (arithmetic and logic unit), first and second registers that supply operands to the first and second inputs of the ALU, respectively, a multiplexer that receives the operands from each of said first and second registers and also the output of said ALU, and an instruction decoder that decodes various instructions and causes said ALU to execute corresponding actions. The instruction decoder then also controls switching of the multiplexer according to the instruction and the operating status of the ALU.

More particularly, the invention is set forth in the appended claims.

## Brief Description of the Drawings

FIG. 1 is a block diagram schematically illustrating an embodiment of the invention.

FIG. 2 is a block diagram illustrating details of major portions of the embodiment in FIG. 1.

FIGS. 3 and 4 are block diagrams illustrating details of the circuitry in FIG. 2.

FIGS. 5 and 6 are flowcharts useful for explaining the background of the invention.

## Preferred Embodiment of the Invention

A preferred embodiment of the invention will be described with reference to the attached drawings.

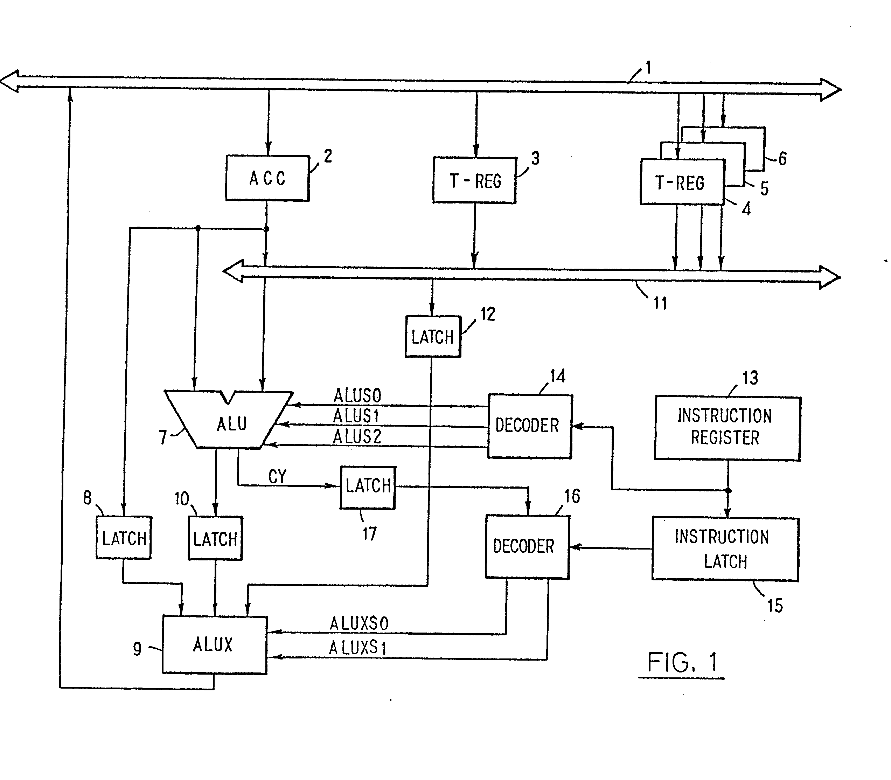

FIG. 1 illustrates schematically a data processing apparatus, wherein a first data bus 1 is connected with inputs of an accumulator register 2 and

JA 9.84.015

each of a plurality of temporary registers 3-6. The output of the accumulator 2 is connected to one input of an ALU (Arithmetic and Logical Unit) 7, and to a first input of a multiplexer 9 (denoted as ALUX) through an accumulator latch 8. The output of the ALU 7 is connected to a second input of the multiplexer 9 through an ALU latch 10.

A second data bus 11 is connected with the outputs of the accumulator 2 and each of the temporary registers 3 - 6. Also, it is connected with the second input of the ALU 7, and with a third input of the multiplexer 9 through a data bus latch 12.

Furthermore, the output of an instruction register 13 is connected to the input of a first decoder circuit 14, and to the input of a second decoder circuit 16 through an instruction latch 15. The said first decoder circuit 14 is adapted for sending control signals ALUS0 - ALUS2 to the ALU 7, while the second decoder circuit 16 is adapted for sending control signals ALUXS0 and ALUXS1 to the multiplexer 9. In addition, a carry output CY is supplied from ALU 7 to the second decoder circuit 16 through a latch 17. Other circuits used for decoding the instructions are not shown here, as they are considered irrelevant to the present invention.

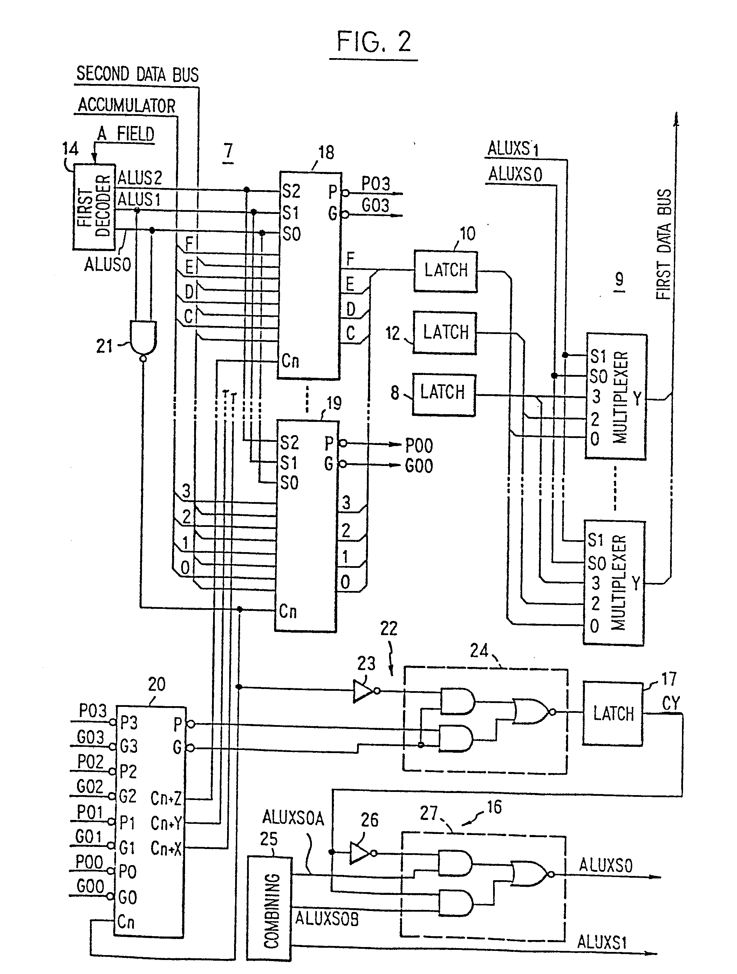

FIG. 2 shows details of major portions of the embodiment in FIG. 1. In FIG. 2, the ALU 7 is illustrated as one for executing arithmetic and logical operations on 16-bit operands. More specifically, the ALU 7 may consist of four cascade-connected 4-bit ALU circuits 18, ..., 19 (only two of which are shown), a look ahead carry generator 20 and the interconnecting lines as shown. Commercially available integrated circuits, such as model No. SN74S381 made by Texas Instruments, Inc., may be used as the ALU circuits 18 to 19, e.g., while model No. SN74S182 of that company may be used as the carry generator 20. Major conventional operations of the ALU 7 are as follows:

SUB: subtracts the data content of the second data bus 11 from the content of the accumulator 2.

ADD: adds the content of the accumulator 2 and the content of the second data bus.

JA 9.84.015

AND: obtains the logical product of the content of the accumulator 2 and the content of the second data bus.

IOR: obtains the logical sum of the content of the accumulator 2 and the content of the second data bus.

EOR: obtains the exclusive OR function of the content of the accumulator 2 and the content of the second data bus.

Some exemplary instructions will be described. An instruction has the format shown below, and its type is specified with its high-order two bits. Here, a description is given only of instructions relating to the ALU, as specified by the upper two bits "00".

| 0 0 | M | C | ' A | D | S |
| --- | --- | --- | --- | --- | --- |

F E  D C  B A  9 8 7 6  5 4 3  2 1 0

In the above format, the M-field is for control of write/read in a memory (not shown), the C-field is for miscellaneous control, the A-field is for determining the type of operation, the S-field is for specifying a register to be read to the second data bus, from those that can be a source of the operation, while the D-field specifies a register into which the result of the operation is to be written (Destination). Although it is possible to specify the accumulator with the S-field and a temporary register with the D-field, for the purpose of simplicity there will be described, in the following, only such cases where the accumulator and a temporary register are made the two source operands and the result of the operation is written into the accumulator.

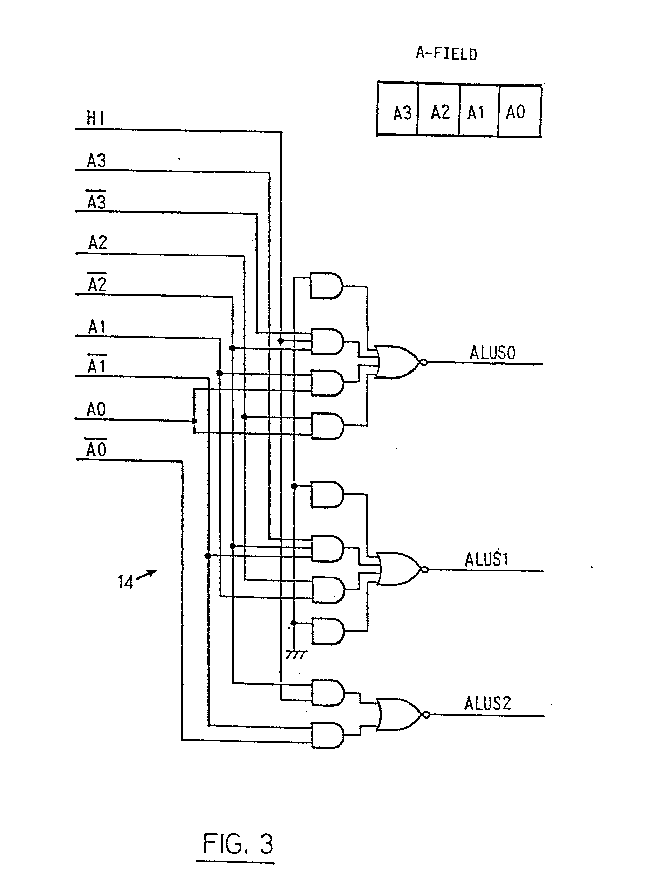

Now, again referring to FIG. 2, the first decoder circuit 14 receives the A-field of such instruction and performs a decoding as shown in Table 3, below, to cause the ALU 7 to execute a specified operation. This decoding is performed, for example, by a combinatorial circuit as shown in FIG. 3. In this figure, the bits in the A-field are denoted as A3 ÷ A0, that is, they are specified by attaching a corresponding suffix to "A". HI is a signal fixed at the logical high level. Typically, this decoding is shown for the case where said IC type SN74S381 is used as the ALU circuits 18 to

JA 9.84.015

19. A description is omitted here of how the ALU circuits 18 ... 19 act internally in response to the output signals of the first decoding circuit 14, i.e. the control signals ALUS0 - ALUS2 for the ALU 7.

Table 3

| Instruction | A-field | ALUS2, S1, S0 | Action of ALU |
|-------------|---------|---------------|---------------|
| MIN | 0001 | 0, 1, 0 | SUB |
| MAX | 0010 | 0, 1, 0 | SUB |
| SUB | 0011 | 0, 1, 0 | SUB |
| ADD | 0100 | 0, 1, 1 | ADD |
| AND | 0101 | 1, 1, 0 | AND |
| IOR | 0110 | 1, 0, 1 | IOR |
| EOR | 0111 | 1, 0, 0 | EOR |

As shown in the above Table 3, two new instructions, denoted as MIN and MAX, are provided and implemented in the apparatus of the present invention, the use of which instructions will be apparent from the ensuing description.

Referring again to FIG. 2, the ALU control signals ALUS0 and ALUS1 are also supplied to the inputs of a NAND circuit 21. The output of the NAND circuit 21, and a carry propagation output P and carry generation output G of the carry generator 20 in inverted form, are supplied to a combinatorial circuit 22. The circuit 22 consists of an inverter 23 and an AND-OR invert circuit 24. When the ALU 7 subtracts the content of the second data bus 11 from the content of the accumulator 2, i.e., when the instructions are MIN, MAX or SUB (when the ALU control signals ALUS0 - ALUS2 are "010"), the combinatorial circuit 22 generates an output of "1" if the former is larger than the latter, and otherwise it generates an output of "0". The output of circuit 22 is supplied to and temporarily stored in the latch 17,

JA 9.84.015

as carry CY indicating the status of the result of the ALU 7 operation, before it is supplied to the second decoding circuit 16.

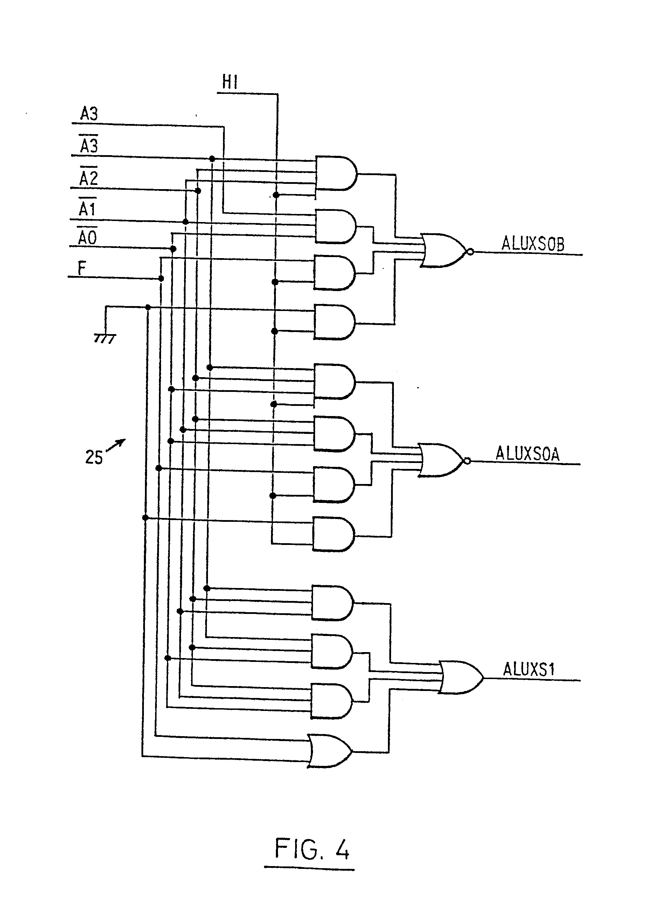

The second decoding circuit 16 consists of a combinatorial circuit 25, an inverter 26 and an AND-OR invert circuit 27. The said combinatorial circuit 25, such as shown in FIG. 4, for example, receives input signals from the A-field of the instruction, and generates output signals ALUXS1, ALUXSOA and ALUXSOB as shown in Table 4.

In FIG. 4, bits of the A-field are denoted by attaching a relevant suffix to "A". HI is a signal fixed at the logical high level, as in FIG. 3. F is an indicator bit which is not used for the present invention.

Table 4

| Instruction | A-field | ALUXS1, 0A, 0B |
|-------------|---------|----------------|
| MIN | 0001 | 1, 1, 0 |
| MAX | 0010 | 1, 0, 1 |
| SUB | 0011 | 0, 1, 1 |
| ADD | 0100 | 0, 1, 1 |
| AND | 0101 | 0, 1, 1 |
| IOR | 0110 | 0, 1, 1 |
| EOR | 0111 | 0, 1, 1 |

Now, the output signal ALUXS0 of the combination circuit consisting of the inverter 26 and the AND-OR invert circuit 27 shows the following behaviour depending on its inputs ALUXSOA and ALUXSOB and the carry CY.

JA 9.84.015

Table 5

| ALUXSOA | ALUXSOB | ALUXSO |
|---------|---------|--------|
| 0 | 0 | 1 |
| 1 | 0 | CY |
| 0 | 1 | $\overline{CY}$ |
| 1 | 1 | 0 |

As seen from Tables 4 and 5, the signal ALUXSO varies according to the carry CY or the inverted carry $\overline{CY}$, if the instruction is MIN or, respectively, MAX, but it is determined independent from the carry CY for other instructions. The relations between the A-field of the instruction and the multiplexer control signals ALUXSO and S1 are summarized as follows:

Table 6

| Instruction | A-field | CY | ALUXSO, S1 |
|-------------|---------|-----|------------|
| MIN | 0001 | 0 | 0, 1 |
| | | 1 | 1, 1 |
| MAX | 0010 | 0 | 1, 1 |
| | | 1 | 0, 1 |
| SUB | 0011 | - | 0, 0 |
| ADD | 0100 | - | 0, 0 |
| AND | 0101 | - | 0, 0 |
| IOR | 0110 | - | 0, 0 |
| EOR | 0111 | - | 0, 0 |

The above-mentioned multiplexer control signals ALUXS0 and ALUXS1 are supplied to the multiplexer 9, as shown in FIGS. 1 and 2. The multiplexer 9 may be constructed from, for example, eight IC's model No. SN74S153 of Texas Instruments. In the configuration shown in FIG. 2, the next input value is selected and outputted according to the control signals ALUXS0 and ALUXS1, and supplied to the first data bus 1, as follows:

Table 7

| ALUXS0 | ALUXS1 | Selected for Output |
|--------|--------|---------------------|
| 0 | 0 | ALU latch 10 |
| 0 | 1 | Data bus latch 12 |
| 1 | 1 | Accumulator latch 8 |

The above relationships are summarized in the following table:

Table 8

| Instruction | CY | Output |
|-------------|-----|--------|
| MIN | 0/1 | Data bus latch 12/ accumulator latch 8 |
| MAX | 0/1 | Accumulator latch 8/ data bus latch 12 |
| SUB | – | ALU latch 10 |
| ADD | – | ALU latch 10 |
| AND | – | ALU latch 10 |
| IOR | – | ALU latch 10 |
| EOR | – | ALU latch 10 |

JA 9.84.015

As seen from the above table, if the instruction is SUB, ADD, AND, IOR or EOR, the output of ALU 7 is supplied to the first data bus 1, and then stored in the accumulator 2. However, if the instruction is MIN, the multiplexer is switched according to the carry CY of the ALU 7. That is, when the content of the accumulator is larger than that of the specified temporary register, or the carry CY is "0", the data in the data bus latch 12, i.e. the content of the second data bus 11 is sent to the first data bus 1 through the multiplexer 9, and stored in the accumulator 2. When the content of the accumulator 2 is smaller than that of the specified temporary register 3, 4, 5 or 6, the carry CY becomes "1", and the data in the accumulator latch 8 or the content of the accumulator 2 is again stored in the accumulator 2 through the multiplexer 9 and the data bus 1. This means that the smaller data is always stored in the accumulator 2.

Similarly, when the instruction is MAX, the multiplexer 9 is switched according to the inverted carry $\overline{CY}$ of the ALU 7. In this case, therefore, the larger data is stored in the accumulator 2. This can be easily verified from Table 8.

In case of conventional instructions, other than MAX and MIN, a normal operation is performed because the content of the ALU latch 10, or the result of the ALU 7 operation is sent to the first data bus 1 through the multiplexer 9, as shown in Table 8.

In the described apparatus, a program that executes the above-mentioned recurrence formula:

$$G (I, J) = MIN \begin{cases} G (I - 1, J) \\ G (I - 1, J - 1) \\ G (I - 1, J - 2) \end{cases} + D (I, J)$$

becomes as follows:

```
MIN   R1, R2
MIN   R1, R3
AR    R4, R1
```

wherein, of course, R1 would represent the accumulator 2 and R2-R4 would represent selected temporary registers 3-6, for example.

JA 9.84.015

As seen from the above, in the described embodiment of the invention, the minimum value can be easily determined by using the instruction MIN. That is, the program can be shortened, and the execution time also is reduced because there is no need to use a conditional branch instruction. Of course, the maximum value can be determined as easily by using the instruction MAX.

To summarize, it is arranged according to the invention that there are provided latches temporarily storing the data being supplied to the two input ports of an ALU, the outputs of which latches and that of the ALU being switched by a multiplexer for selected final output. And, it is also arranged that the smaller or larger one of two temporarily stored data items is obtained according to the status of the ALU and a novel instruction MIN or, respectively, MAX. Therefore, in determining the minimum or maximum value of a given set of data values having N elements, it is only required to execute the MIN or MAX instruction N - 1 times, and the maximum or minimum can thus be determined easily and fast. That is, the length of a program is shortened and the execution time is reduced.

JA 9.84.015

## CLAIMS

1.  A general purpose data processing apparatus comprising:

    an ALU (7);

    a first and second registers (2, 3-6) connected to deliver operands to the first and the second input of said ALU respectively; and

    an instruction decoder (14) adapted for decoding various instructions and for controlling said ALU (7) to perform various corresponding operations;

    characterized by:

    a multiplexer (9) which is connected to receive said operands from said registers and the output of said ALU; and

    an auxiliary instruction decoder (16) adapted for controlling the switching of said multiplexer (9) so as to output a selected one of the operands from said registers in response to a predetermined instruction and a resultant state of said ALU, and to output the output of said ALU in response to other predetermined instructions.

2.  The apparatus of claim 1 wherein said resultant state is designated by a comparison output signal, said selected one of the operands is the smaller one of two numerical operands and said predetermined instruction is a minimum finding instruction (denoted as MIN).

3.  The apparatus of claim 1 wherein said resultant state is designated by a comparison output signal, said selected one of the operands  is the larger one of two numerical operands and said predetermined instruction is a maximum finding instruction (denoted as MAX).

4.  Apparatus of claim 2 and/or claim 3, wherein said instruction decoder (14) decodes a said minimum or a said maximum finding instruction as a subtract operation of the ALU (7), and the auxiliary decoder (16) decodes the same instruction as a selective gating operation of either a carry signal or an inverted carry signal from the ALU to the

JA 9.84.015

-13-  **0181516**

multiplexer (9) to serve as a switch control signal (ALUXS0).

5. The apparatus of claims 2-4, wherein the auxiliary decoder (16) further decodes both MIN and MAX instructions into generation of a common second switch control signal (ALUXS1) to the said multiplexer (9).

6. The apparatus of claim 5 wherein the absence of said second control signal (ALUXS1) causes the multiplexer (9) to select the output of said ALU (7) for final output to a destination register, and the presence of said second control signal causes the multiplexer (9) to select either one of the operands, in accordance with the said carry-dependent switch control signal (ALUXS0), for said final output to said destination register.

7. The apparatus of any previous claim, wherein the output of said ALU (7) is connected to a first input of said multiplexer (9) through a latch (10), the output of said first register (2) is connected to a second input of said multiplexer (9) through a latch (8), and the second registers (3-6) are connected for output to a common (second) data bus (11) which is in turn connected to a third input of said multiplexer through a latch (12).

JA 9.84.015

0181516

FIG. 1

JA 9.84.015

# FIG. 2

A-FIELD

| A3 | A2 | A1 | A0 |
|----|----|----|----|

HI

A3

$\overline{A3}$

A2

$\overline{A2}$

A1

$\overline{A1}$

A0

$\overline{A0}$

14

ALUS0

ALUS1

ALUS2

FIG. 3

JA 9.84.015

FIG. 4

0181516

START

$R_1 > R_2$

N    Y

$R_2 > R_3$

N

$R_1 > R_3$    Y

N    Y

$R_4 + R_1$ | $R_4 + R_3$ | $R_4 + R_2$

END

FIG. 5

START

$R_1 < R_2$    N

Y

$R_2 \longrightarrow R_1$

$R_1 < R_3$    N

Y

$R_3 \longrightarrow R_1$

$R_4 + R_1$

END

FIG. 6

JA 9.84.015